(19) Europäisches Patentamt
European Patent Office
Office européen des brevets

(11) EP 0 678 525 B1

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int Cl.$^6$: **C08B 37/16**

(21) Anmeldenummer: **95105907.0**

(22) Anmeldetag: **20.04.1995**

# (54) Teilweise acylierte beta-Cyclodextrine

Partially acylated beta-cyclodextrins

Bêta-cyclodextrines partiellement acylées

(84) Benannte Vertragsstaaten:
**BE DE FR GB IT NL**

(30) Priorität: **22.04.1994 DE 4414128**

(43) Veröffentlichungstag der Anmeldung:
**25.10.1995 Patentblatt 1995/43**

(73) Patentinhaber: **Consortium für elektrochemische Industrie GmbH**
**D-81379 München (DE)**

(72) Erfinder: **Hirsenkorn, Rolf, Dr.**
**D-81477 München (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
- **JOURNAL OF THE AMERICAN CHEMICAL SOCIETY, Bd. 71, Nr. 1, 26.Januar 1949 DC US, Seiten 353-356, D. FRENCH ET AL. 'Studies on the Schardinger Dextrins.'**
- **DATABASE WPI Week 9407 Derwent Publications Ltd., London, GB; AN 053986 'New (2,3 or 6 or 2,6 or 3,6-acetyl) cyclodextrins' & JP-A-06 009 709 (TOPPAN PRINTING CO LTD) , 18.Januar 1994**
- **CHEMICAL ABSTRACTS, vol. 119, no. 14, 4.Oktober 1993 Columbus, Ohio, US; abstract no. 145682j, UEMASU, ISAMU 'Trapping of organic halides using cyclodextrin derivatives'**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 678 525 B1

Printed by Jouve, 75001 PARIS (FR)

## Beschreibung

Die Erfindung betrifft teilweise acylierte β-Cyclodextrine, Verfahren zu ihrer Herstellung und ihre Verwendung.

Cyclodextrine sind cyclische Oligosaccharide, die aus 6, 7 oder 8 α(1-4)-verknüpften Anhydroglucoseeinheiten aufgebaut sind. Die durch enzymatische Stärkekonversion hergestellten α-, β- oder γ-Cyclodextrine unterscheiden sich in dem Durchmesser ihrer Kavität und eignen sich generell zum Einschluß von zahlreichen hydrophoben Gastmolekülen unterschiedlicher Größe. Die Anwendungen sind durch die geringen Löslichkeiten, speziell des β-Cyclodextrins (1.8% w/v in Wasser bei 25°C), limitiert.

Eine gängige Methode, die Löslichkeit zu erhöhen, ist die chemische Derivatisierung an den freien Hydroxylgruppen der Cyclodextrine. An den einzelnen Anhydroglucoseeinheiten können an der 2-, 3- und/oder 6-Position geeignete Substituenten eingeführt werden.

Gemische an substituierten Cyclodextrinen werden durch ihren durchschnittlichen Substitutionsgrad (DS-Wert; average degree of substitution) charakterisiert. Der DS-Wert gibt an, wieviele Substituenten im Schnitt pro Anhydroglucose gebunden sind. Die Bestimmung des DS-Wertes ist beispielsweise über $^1$H-NMR Spektroskopie möglich.

Acylierte β-Cyclodextrine sind beispielsweise aus A.P. Croft, A. Bartsch, Tetrahedron 39, (1983), S. 1420-1427 bekannt.

6-Acyl-β-Cyclodextrine sind aus K. Mitra, Drug Development and Industrial Pharmacy 18 (15), (1992), 1599-1612 bekannt. In dieser Veröffentlichung wurden der Einfluß der Kettenlänge und des Substitutionsgrades der Acylgruppen von 6-Acyl-β-Cyclodextrinen auf die Komplexbildungseigenschaften und Solubilisierungseigenschaften mit Steroiden untersucht.

Ferner werden von der Firma Cyclolab Acyl-β-Cyclodextrine vertrieben. Laut Produktdatenblatt enthalten diese 8 bis 10 Acetyl-Gruppen pro CD Ring, wobei diese Acyl-Gruppen überwiegend an der C6 Position der Anhydroglucose angeknüpft sind. Dieses Produkt hat somit einen DS von 1,28.

Ferner ist in CA 117:258209 und in CA 119:145682 die Verwendung von acylierten Cyclodextrinen als Komplexierungsmittel erwähnt, ohne daß Aussagen über die Eigenschaften oder Zusammensetzung dieser Cyclodextrin-Derivate gemacht würden.

Im Journal of the American Chemical Society, Bd. 71, 1949, S. 353-356, wird die Herstellung von peracylierten β-Cyclodextrinen mit Essigsäureanhydrid und Natriumacetat offenbart. Die Acetylierung erfolgt dabei in einem großen Überschuß an Essigsäureanhydrid. Die Peracetylierung wird zum Zweck der Strukturaufklärung durchgeführt.

Der Derwent Abstract WPI 94-053986 offenbart die Herstellung von selektiv in Position 6 substituierten Cyclodextrin-Derivaten.

Die bekannten acylierten Cyclodextrine besitzen wegen der gemäß den bekannten Herstellungsverfahren anfallenden selektiven Substitution am Sauerstoff 0-6 der Glucosen eine vergleichsweise schlechte Löslichkeit und ein geringes Solubilisierungsvermögen für in Wasser schwer lösliche Substanzen.

Die vorliegende Erfindung betrifft teilweise acylierte Cyclodextrine der Formel:

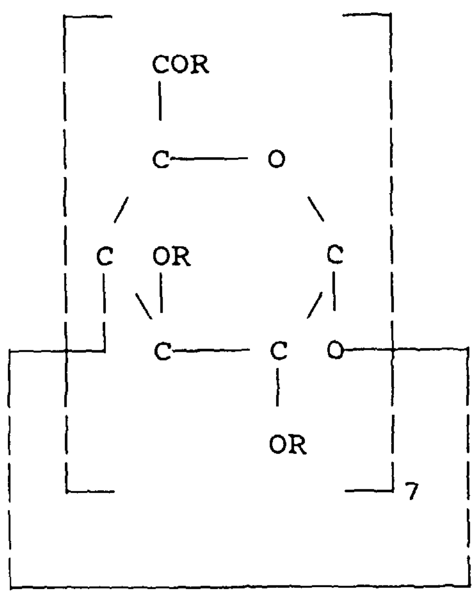

(I),

wobei R Wasserstoff oder R1 bedeutet, dadurch gekennzeichnet, daß R1 gleich oder verschieden sein kann und Acetyl, Propionyl, Butyryl, 2-Alkoxyacetyl, 2-Chloracetyl, 2-Fluoracetyl, 2-N-Acetylaminoacetyl, Methacryloyl oder Acryloyl bedeutet,
und R1 randomisiert vorliegt und der DS für R1, gemessen mittels $^1$H-NMR-Spektroskopie, zwischen 0,30 und 1,20 liegt, und die Hydroxygruppen in 6-Position der Glucosen zu weniger als 85 % substituiert sind.

Besonders bevorzugt sind die Hydroxygruppen in 6-Position der Glucosen zu weniger als 80% substituiert. Insbesondere sind sie zu weniger als 75 % substituiert.

Vorzugsweise bedeutet R1 in Formel I Acetyl, Propionyl, Butyryl oder 2-Chloracetyl, besonders bevorzugt bedeutet R1 in Formel I Acetyl.

Vorzugsweise liegt der DS für R1 zwischen 0,8 und 1,2, besonders bevorzugt zwischen 0,9 und 1,1.

Die erfindungsgemäßen acylierten Cyclodextrin-Derivate weisen eine wesentlich höhere Wasserlöslichkeit auf als bekannte acylierte Cyclodextrin-Derivate. Zudem besitzen die erfindungsgemäßen Derivate eine erhöhte Solubilisierungskapazität für in Wasser schwerlösliche Substanzen wie beispielsweise Steroide. Aufgrund der hervorragenden Löslichkeit sowohl der erfindungsgemäßen Cyclodextrin-Derivate als auch der Einschlußkomplexe, die mittels der erfindungsgemäßen Cyclodextrin-Derivate gebildet werden, können die erfindungsgemäßen Cyclodextrin-Derivate in wesentlich höheren Konzentrationen eingesetzt werden und somit wesentlich mehr Gastverbindungen solubilisiert werden. So hat das bei Mitra Drug Development and Industrial Pharmacy 18 (15) 1611, Fig. 8 beschriebene acylierte β-CD nur eine Wasserlöslichkeit von maximal 1 mmol/l und eine Solubilisierungskapazität für Hydrocortison von etwa 1 bis 1,8 mmol/l. Ein erfindungsgemäßes Acetyl-β-Cyclodextrinderivat mit einem DS von 1,0 ist bis zu 210 mmol/l wasserlöslich und zeigt eine Solubilisierungskapazität für Hydrocortison von bis zu 123 mmol/l.

Die Bestimmung des DS-Wertes kann beispielsweise mittels $^1$H-NMR-Spektroskopie in einem geeigneten Lösungsmittel wie Dimethylsulfoxid/Trifluoressigsäure erfolgen. Zur Bestimmung des DS-Wertes werden die Signale der Acylgruppen (Int.-Ac) und der Zuckerprotonen (Int.-Zu) integriert, durch die Zahl der Protonen des Acylsubstituenten bzw. der Zuckerprotonen geteilt und ins Verhältnis gesetzt.

Die Bestimmung des DS ist ebenso aus der Substituentenverteilung heraus möglich. Auf Grund ihrer Struktur können Cyclodextrine an der O2-, O3- und/oder an der O6-Position substituiert werden. Die Bestimmung des DS-Wertes ist beispielsweise dadurch möglich, daß die Produkte methyliert und anschließend zu den Glucoseeinheiten hydrolysiert und durch Reduktion und Acetylierung zu den D-Glucitolacetaten umgewandelt werden (P. Mischnick, Analysis of the Substitution Pattern of Chemically Modified Cyclodextrins in Dominique Duchene, New Trends in Cyclodextrins and Derivatives, Editions des Santes, Paris). Eine gaschromatographische Auftrennung liefern die molaren Anteile der im folgenden aufgelisteten, insgesamt 8 theoretisch möglichen Glucoseeinheiten in den jeweiligen Cyclodextrin-Derivaten.

| Anzahl der Acetoxygruppen | Bezeichnung | D-Glucitolacetat |
|---|---|---|
| 3 | S2,3,6 | D-Glucitol-hexaacetat |
| 2 | S3,6 | 1,3,4,5,6-Penta-O-acetyl-2-mono-O-methyl-D-Glucitol |
| 2 | S2,6 | 1,2,4,5,6-Penta-O-acetyl-3-mono-O-methyl-D-Glucitol |
| 2 | S2,3 | 1,2,3,4,5-Penta-O-acetyl-6-mono-O-methyl-D-Glucitol |
| 1 | S6 | 1,4,5,6-Tetra-O-acetyl-2,3-di-O-methyl-D-Glucitol |
| 1 | S3 | 1,3,4,5-Tetra-O-acetyl-2,6-di-O-methyl-D-Glucitol |
| 1 | S2 | 1,2,4,5-Tetra-O-acetyl-3,6-di-O-methyl-D-Glucitol |
| 0 | S0 | 1,4,5-Tri-O-acetyl-2,3,6-tri-O-methyl-D-Glucitol |

Aus den ermittelten mol%-Anteilen der jeweiligen Glucoseeinheiten läßt sich auch der durchschnittliche Substitutionsgrad der einzelnen Positionen errechnen. Diese mittlere Wahrscheinlichkeit X einer Substitution in einer bestimmten Position errechnet sich wie im folgenden für X6 (mittlere Wahrscheinlichkeit einer Substitution in der O6-Position) dargestellt:

$$X6 = \text{mol\% } S6 + \text{mol\% } S2,6 + \text{mol\% } S3,6 + \text{mol\% } S2,3,6;$$

Analog lassen sich die durchschnittlichen Substitutionsgrade für eine Substitution in O2- und O3-Position berechnen. Über die Substituentenverteilung kann auch der Substitutionsgrad bestimmt werden.

Die Erfindung betrifft ferner Verfahren zur Herstellung von acylierten β-Cyclodextrinderivaten, die dadurch gekennzeichnet sind, daß β-Cyclodextrin mit mindestens einem Acylierungsmittel in Gegenwart eines basischen Katalysators umgesetzt wird.

Im erfindungsgemäßen Verfahren ist β-Cyclodextrin in handelsüblicher Qualität mit einem Wassergehalt zwischen 0 und 16 % einsetzbar. Aus Kostengründen wird vorteilhafterweise β-Cyclodextrin mit einem Wassergehalt von 10 bis 15 % wie es handelsüblich ist, eingesetzt. Das Cyclodextrin kann jedoch ebenso in an sich bekannter Weise, beispielsweise durch enzymatische Umsetzung von Stärke mit Cyclodextrin Glycosyltransferase (CGTase E.C.2.4.1.19), hergestellt werden.

Als Acylierungsmittel werden vorzugsweise Carbonsäureanhydride oder Carbonsäuren eingesetzt. Besonders bevorzugt werden Essigsäureanhydrid, Propionsäureanhydrid, Buttersäureanhydrid, 2-Chloressigsäureanhydrid, 2-Fluoressigsäureanhydrid, Acrylsäureanhydrid oder Methacrylsäureanhydrid oder die korrespondierenden Carbonsäuren einzeln oder in beliebiger Mischung eingesetzt. Insbesondere werden Essigsäureanhydrid oder Essigsäure eingesetzt.

Als Katalysator werden vorzugsweise die Alkalisalze der zu den Carbonsäureanhydriden korrespondierenden Säuren beispielsweise Natriumacetat, Kaliumacetat, Natriumpropionat, Kaliumpropionat, Natriumbutyrat, Kaliumbutyrat und/oder tertiäre Amine wie beispielsweise Triethylamin oder Pyridin und/oder basische Ionenaustauscher (z.B. Amberlyst A21 oder Amberlite IRA-93 der Fa. Rohm & Haas) eingesetzt. Besonders bevorzugt wird Natriumacetat eingesetzt.

Die Acylierung ist direkt im Acylierungsmittel, ohne zusätzliches Lösungsmittel möglich.

Vorteilhaft hinsichtlich der Produktfärbung ist es, wenn man mit mindestens einem inerten Lösungsmittel verdünnt. Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Beispiele für geeignete inerte Lösungsmittel sind Essigsäure, Propionsäure, Buttersäure, Formamid, Methylformamid, Dimethylformamid, N-Methylpyrrolidon, DMPU (1,3-Dimethyl-3,4,5,6-tetrahydro-2(1H) -pyrimidinon), Acetamid, Methylacetamid oder Dimethylacetamid.

Besonders vorteilhaft ist es, wenn man bei Verwendung von Carbonsäureanhydriden als Acylierungsmittel zur Verdünnung als Lösungsmittel die dem Acylierungsmittel entsprechende Carbonsäure einsetzt, also beispielsweise bei Essigsäureanhydrid als Acylierungsmittel, Essigsäure als Lösungsmittel.

Vorzugsweise werden pro Mol β-Cyclodextrin 2-30 mol, bevorzugt 3 - 15 mol, besonders bevorzugt 5 - 13 mol, des Acylierungsmittels eingesetzt. Die eingesetzten Molverhältnisse werden dabei je nach angestrebtem Substitutionsgrad und Wassergehalt des verwendeten Cyclodextrins gewählt.

Vorzugsweise werden pro Mol β-Cyclodextrin 0,01 - 3 mol, bevorzugt 0,1 - 2 mol mindestens eines der genannten Katalysatoren eingesetzt.

Vorzugsweise werden β-Cyclodextrin und Reaktionsmedium in einem Mengenverhältnis β-CD/Reaktionsmedium von 1:0,5 bis 1:10, vorzugsweise etwa 1:1 bis 1:4 eingesetzt, wobei unter Reaktionsmedium die Summe aus Acylierungsmittel und Lösungsmittel zu verstehen ist.

Zur Herstellung der erfindungsgemäßen acylierten Cyclodextrine werden Cyclodextrin, Acylierungsmittel, Katalysator und Reaktionsmedium in den angegebenen Verhältnissen entweder gleichzeitig oder nacheinander zusammengegeben.

Vorzugsweise wird das Acylierungsmittel zum Gemisch der übrigen Komponenten bei erhöhter Temperatur (ca. 80°C bis 120°C) zugetropft, um die Reaktion unter Kontrolle zu halten.

Das Reaktionsgemisch, in der Regel eine Suspension, wird bei erhöhter Temperatur (Temp. ca. 80°C bis 150°C ) gerührt. Das Ende der Reaktion ist in der Regel durch das Aufklaren des Reaktionsgemisches charakterisiert, da die anfängliche Suspension in Lösung geht.

Die Aufarbeitung erfolgt durch Abdestillieren der flüchtigen Komponenten im Teilvakuum, der Rückstand wird in Wasser aufgenommen und erneut im Teilvakuum eingedampft. Diese Verfahrensschritte werden vorzugsweise mehrfach, beispielsweise dreifach wiederholt.

Die so erhaltene wäßrige Lösung enthaltend die erfindungsgemäßen teilweise acylierten β-Cyclodextrine, kann mittels bekannter Verfahren (beispielsweise zur Entfernung von Salzen oder Lösungsmittel-Resten durch Fällungsmethoden oder Dialyse) weiter gereinigt und getrocknet (beispielsweise Gefriertrocknung, Sprühtrocknung) werden.

Das erfindungsgemäße Verfahren ist somit ein einfaches Herstellungsverfahren ohne aufwendige Reinigungsschritte. Es ermöglicht die direkte Herstellung von acyliertem CD in nur einem Reaktionsschritt durch die Umsetzung von nativem CD mit Acylierungsmitteln in Gegenwart eines Katalysators.

Das erfindungsgemäße Verfahren ist vorteilhaft, weil gemäß den in der Cellulosechemie bisher verwendeten Verfahren (z.B. K. Blaser et al., "Cellulose Esters" in Ullmanns Encyklopedia of Industrial Chemistry, 5. Edition Ed. E. Gerhartz, VCH Verlagsgesellschaft, Weinheim, 1986, pp. 419-459) normalerweise zunächst hoch acylierte Produkte hergestellt werden, welche nachträglich bis zum gewünschten Substitutionsgrad hydrolysiert werden.

Das erfindungsgemäße Verfahren vermeidet die Bildung von Hydrolyseprodukten durch die Umgehung des Hydrolyseschrittes und vermindert damit Reinigungsprobleme. Es ermöglicht ferner die Herstellung von weniger gefärbten Reaktionsprodukten.

Durch einfache Variation des Acyldonors ist das erfindungsgemäße Verfahren flexibel und allgemein verwendbar. Das Verfahren ist wirtschaftlich. Es arbeitet katalytisch, als stöchiometrische Nebenprodukte entstehen leicht flüchtige

Verbindungen, welche einfach destillativ abgetrennt werden können. Der durch das Verfahren erzielte Umsatz ist quantitativ.

Eine weitere Aufreinigung der Cyclodextrin-Derivate erfolgt, falls erwünscht, mittels an sich bekannter Verfahren wie beispielsweise durch Fällung, Ionenaustauscherchromatographie, Dialyse, Säulenchromatographie oder präparative HPLC.

Die erfindungsgemäßen Cyclodextrin-Derivate eignen sich für alle bekannten Anwendungen von Cyclodextrinen und Cyclodextrin-Derivaten.
Sie eignen sich insbesondere

- zur Solubilisierung von schwer wasserlöslichen Verbindungen wie beispielsweise Steroiden,
- als Formulierungshilfsmittel in pharmazeutischen, kosmetischen und agrochemischen Produkten,
- zur Stabilisierung von licht-, wärme-, oder oxidationsempfindlichen Stoffen,
- zur Entfettung und Reinigung von beliebigen Oberflächen,
- zum Ersatz von organischen Lösungsmitteln insbesondere bei der Trennung und Extraktion von Substanzen aus lipophilen Medien,
- als Hilfsstoffe, insbesondere bei der Beschichtung und/oder Haftvermittlung in der Papier-, Leder- und Textilindustrie,
- als Phasentransfer-Katalysator
- sowie zur Geschmacks- und Geruchsmaskierung.

Die folgenden Beispiele dienen der weiteren Erläuterung der Erfindung.

Der Reaktionsverlauf der in den Beispielen beschriebenen Umsetzungen wurde mittels Dünnschichtchromatographie kontrolliert. Die Substanzen müssen vor der Dünnschichtchromatographie beispielsweise durch Fällung mit Aceton isoliert werden. Die in den Beispielen genannten DS Werte wurden mittels $^1$H-NMR-Spektroskopie (Lösungsmittel Dimethylsulfoxid-Trifluoressigsäure) ermittelt.

Beispiel 1: Herstellung von Acetyl-β-CD (DS 0,99)

200 g (153.3 mmol) β-CD (13% Wasser) und 6 g (73.8 mmol) Natriumacetat wurden in 174 ml (1.75 Mol) Essigsäure suspendiert und auf T = 105°C erwärmt. 159 ml (1686 mmol) Essigsäureanhydrid wurden zur gut gerührten Suspension über einen Zeitraum von etwa einer Stunde langsam zugetropft. Der Ansatz erwärmte sich dabei auf Rückflußtemperatur (117°C). Anschließend wurde unter Rückfluß gekocht, wobei das Reaktionsgemisch langsam in Lösung ging. Nach ca. 14 h war die Umsetzung beendet. Der Ansatz kühlte auf Raumtemperatur ab.

Zum Reaktionsgemisch wurden 50 ml Wasser zugetropft. Die Essigsäure wurde weitgehend einrotiert. (T= 80° C, 100 mm Hg). Dann wurde das Produkt in 200 ml Wasser gelöst und einrotiert. Dieser Schritt wurde insgesamt 3 mal durchgeführt. Zum Schluß wurde das Produkt in 400 g Wasser gelöst. Das so erhaltene Produkt hatte einen DS von 0,99.

Beispiel 2: Herstellung von Acetyl-β-CD (DS 0.74)

Wie in Beispiel 1 beschrieben, wurden 100 g (76.7 mmol) β-CD (13% Wasser), 55 g (537 mmol) Essigsäureanhydrid, 110 ml Essigsäure und 6 g (73.8 mmol) Natriumacetat umgesetzt. Nach ca. 14 h war die Umsetzung beendet. Die weitere Aufarbeitung erfolgte wie in Beispiel 1 beschrieben. Das Produkt hatte einen DS von 0,74.

Beispiel 3: Herstellung von Acetyl-β-CD (DS 0,95)

200 g (135,4 mmol) β-CD (12,2 % Wasser) und 30 g (367 mmol) Natriumacetat wurden in 700 ml Essigsäure suspendiert und auf T = 117°C (Rückflußtemperatur) erwärmt. Es wurde unter Rückfluß gekocht, wobei das Reaktionsgemisch langsam in Lösung ging (ca. 8,5 h). Danach wurde weitergekocht bis ein durchschnittlicher Substitutionsgrad von DS ca. 1 erreicht wurde (ca. 30 h). Dies wurde durch Probennahme und NMR-Analytik kontrolliert. Der Ansatz wurde auf Raumtemperatur abgekühlt.

Beispiel 4: Herstellung von weiteren Acetyl-β-CD Derivaten

Wie in Beispiel 1 beschrieben, wurden Acetyl-β-CD Derivaten mit einem DS von 0,97 und 0,98 hergestellt.
(DS 0,97: 1000 g (767 mmol) β-CD , 860 g (8,44 mmol) Essigsäureanhydrid, 1000 ml Essigsäure, 30 g (369 mmol) Natriumacetat; 117°C; 17 h)
(DS 0,98: 100 g (76,7 mmol) β-CD, 86,1 g (844 mmol) Essigsäureanhydrid, 80 ml Essigsäure, 6 g (73,8 mmol) Natriumacetat; 105°C; 20 h)

Beispiel 5: Herstellung von Acetyl-β-CD (DS 0,96) mittels einer Verfahrensvariante ohne Lösungsmittelzusatz, und ohne Dosierung des Acylierungsmittels.

100 g (76,7 mmol) β-CD (13% Wasser), 86,1 g (844 mmol) Essigsäureanhydrid, 110 ml Essigsäure und 6 g (73,8 mmol) Natriumacetat wurden bei Raumtemperatur vermischt und auf 80°C erwärmt. Aufgrund der Exothermie der Reaktion erhitzt sich der Ansatz bis auf Rückflußtemperatur. Es wurde weiter unter Rückfluß gekocht bis zum Aufklaren der Suspension. (Reaktionsdauer 9h).

Die Aufarbeitung erfolgt analog Beispiel 1.

Das so erhaltene Produkt hatte einen DS von 0,96.

Beispiel 6: Herstellung von Acetyl-β-CD (DS 0,91) mittels eines 2-Stufenverfahrens.

80,2 g (61,55 mmol) β-CD (13% Wasser) wurden in 156,5 g (1538 mmol) Essigsäureanhydrid und 0,8 g (9,9 mmol) Natriumacetat suspendiert und auf 120°C erhitzt. Nach 4 h wurde der Ansatz klar. Es wurde auf Raumtemperatur abgekühlt. Anschließend wurden 8 g Schwefelsäure (konz.) in 40 ml Wasser zugetropft und auf 50°C erhitzt. Nach 8 h wurden nochmals 2 g Schwefelsäure in 10 g Wasser zugegeben. Nach weiterer 1 h bei 50°C wurde die Hydrolyse durch Zugabe von 16 g Natriumacetat gestoppt und auf Raumtemperatur abgekühlt. Der Ansatz wurde filtriert und einrotiert.

Das so erhaltene Produkt hatte einen DS von 0,91.

Das Produkt ist deutlich brauner gefärbt als die nach dem erfindungsgemäßen Verfahren mittels Direktacylierung hergestellten Produkte

reduzierende Zucker: < 0,1%

Beispiel 7: Herstellung von Propionyl-β-CD (DS 0,90)

100 g (76,7 mmol) β-CD (13 % Wasser), 109,7 g (843 mmol) Propionsäureanhydrid, 6 g (73,8 mmol) Natriumacetat und 100 ml Propionsäure wurden analog Beispiel 1 umgesetzt und aufgearbeitet. Die Reaktionstemperatur betrug 140°C, Die Reaktionszeit war 15 h.

Das so erhaltene Produkt hatte einen DS von 0,90.

Beispiel 8: Bestimmung der Substituentenverteilung der gemäß Beispiel 1 bis 3 hergestellten Produkte.

5 mg der Probe gemäß Beispiel 1 bis 3 wurden in ein 4 ml Reacti-Vial (Reaktionsgefäß) eingewogen dazu wurde 1 ml Trimethylphosphat pipettiert. Der Ansatz wurde gegebenenfalls im Ultraschallbad für kurze Zeit gelöst.

Es wurden 100 µl Methyltrifluormethansulfonat und 150 µl 2,6-di-tertbutylpyridin hinzugefügt, jeweils mit 1 Rührer versehen, gut verschlossen und im Wasserbad bei 50°C zwei Stunden reagieren gelassen. Das Gemisch wurde mit 20 ml A. bidest. quantitativ in einen 50 ml Schütteltrichter gespült und mit 5 ml Chloroform 1 mal gut ausgeschüttelt.

Die unterste Schicht wurde in ein Reacti-Vial abgelassen und mit $N_2$-Gas bis zur Trockene bei Raumtemperatur verdampft.

Hydrolyse

Die Probe aus dem Methylierungsschritt wurde mit Trifluoressigsäure bis zur Marke 4ml aufgefüllt, verschlossen und 4 Stunden bei 110°C erhitzt. Nach dem Abkühlen auf ca. 60°C wurde die Trifluoressigsäure mit Stickstoff abgeblasen (trocken). Den Rückstand versetzte man 3 mal mit ca. 25 ml Dichlormethan und bließ jeweils mit Stickstoff ab.

Reduktion

Zum Hydrolyse-Rückstand gab man 0,25 ml einer 0,5 M Na-Borhydridlösung in $NH_4OH$ und erwärmt mindestens 1 Stunde bei 60°C. Das überschüssige Reagenz wurde nach Erkalten, durch Zugabe von Eisessig zerstört, bis zum Umschütteln keine Gasentwicklung mehr auftrat. Durch wiederholte Zugabe von ca. 2%igem essigsauren Methanol und anschließendem Abblasen mit Stickstoff wurde das Borat als Borsäuremethylester entfernt: 6 mal wurde jeweils bis zur Marke 4 ml aufgefüllt, und jeweils bis (fast) zur Trockene eingeengt.

Acetylierung

Nach dem Abkühlen wurden 25 µl Pyridin und 200 µl Acetanhydrid zugegeben. Das Reacti-Vial wurde verschlossen 3 h bei 100°C in den Trockenschrank gestellt.

Nach dem Abkühlen wurde vorsichtig ca. 1-2 ml gesättigte Natriumhydrogencarbonatlösung hinzugefügt und schnell verschlossen. In ein zweites Reaktionsgefäß kamen 1 ml $CHCl_3$ und etwas $NaHCO_3$-Lösung. Die Lösung aus dem ersten Gefäß wurde vorsichtig in das zweite gegossen, verschlossen, etwas geschüttelt, gelüftet, dann gut geschüttelt. Die wässrige Phase wurde abpipettiert und verworfen. Das erste Gefäß wurde zweimal ausgespült und damit wurde der Ausschüttelungsvorgang ca. 3 mal wiederholt. Dem so gereinigten Chloroform wurde $CaCl_2$ zugesetzt, evtl. noch etwas $CHCl_3$ zugefügt und mit einer Glasspitze die Lösung herausgeholt, um sie in ein Probengläschen zu pipettieren. Anschließend erfolgte die GC-Analyse.

Die Substituentenverteilung ist in Tabelle 1 wiedergegeben.

Tab.1:

| Substituentenverteilung AC-β-CD | | SO | S3 | S2 | S6 |
|---|---|---|---|---|---|
| Beispiel 2 | AC-β-CD(0,74) | 32,60% | 3,55% | 0,90% | 53,35% |
| Beispiel 1 | AC-β-CD(0,99) | 23,15% | 4,85% | 0,95% | 51,85% |
| Mitra-Vergleichsbeispiel | AC-β-CD(1,13) | 8,60% | 1,65% | 0,95% | 68,80% |
| Cyclolab-Produkt | AC-β-CD(1,28) | 15,20% | 7,55% | 1,55% | 40,35% |
| Substituentenverteilung AC-β-CD | | S2,3 | S3,6 | S2,6 | S2,3,6 |
| Beispiel 2 | AC-β-CD(0,74) | 1,10% | 5,65% | 1,85% | 1,00% |
| Beispiel 1 | AC-β-CD(0,99) | 1,60% | 11,55% | 2,60% | 3,60% |
| Mitra-Vergleichsbeispiel | AC-β-CD(1,13) | 1,15% | 13,15% | 2,20% | 2,70% |
| Cyclolab-Produkt | AC-β-CD(1,28) | 3,65% | 19,70% | 3,20% | 7,65% |
| Substituentenverteilung AC-β-CD | | X2 | X3 | X2,3 | X6 |
| Beispiel 3 | AC-β-CD(0,95) | 11,10% | 11,40% | 22,50% | 73,00% |
| Beispiel 2 | AC-β-CD(0,74) | 4,85% | 11,30% | 16,15% | 61,85% |
| Beispiel 1 | AC-β-CD(0,99) | 8,75% | 21,60% | 30,35% | 69,60% |
| Mitra-Vergleichsbeispiel | AC-β-CD(1,13) | 7,00% | 18,65% | 25,65% | 86,85% |
| Cyclolab- Produkt | AC-β-CD(1,28) | 17,05% | 39,55% | 56,60% | 70,65% |

Beispiel 8: Bestimmung der Wasserlösichkeit und der Solubilisierungskapazität der gemäß Beispiel 1 bis 5 hergestellten Produkten sowie von zwei Produkten des Stands der Technik.

Das "Mitra-Produkt" wurde gemäß K. Mitra, Drug Development and Industrial Pharmacy 18 (15), (1992), 1599-1612 hergestellt. Das Cyclolab-Produkt wurde von der Fa. Cyclolab käuflich erworben.

Die Wasserlöslichkeit wurde bei 25°C bestimmt. Zur Bestimmung der Solubilisierungskapazität wurden 30%ige wässrige Lösungen der acylierten Cyclodextrine hergestellt und mit einem Überschuß an Hydrocortison 24h bei 25°C geschüttelt. Nicht gelöstes Hydrocortison wurde durch Filtration mit einem Membranfilter (0,2 µm) abgetrennt. Im Filtrat wurde die Hydrocortison-Konzentration mittels HPLC bestimmt. Die Wasserlöslichkeit und die Solubilisierungsergebnisse sind in Tabelle 2 aufgeführt.

Tab.2 :

| | | Wasserlöslichkeit [Gew./Gew.] | Solubilisierung Hydro. cort. [mg/ml] |
|---|---|---|---|
| Beispiel 2 | Ac-β-CD(0,74) | 25,10% | 16,8 |
| Beispiel 1 | Ac-β-CD(0,99) | 53,00% | 44,5 |
| Beispiel 3 | Ac-β-CD(0,95) | | 40,3 |
| Beispiel 4 | Ac-β-CD(0,96) | >70% | 44,7 |
| Beispiel 4 | Ac-β-CD(0,98) | >70% | 41,1 |
| Beispiel 5 | Ac-β-CD(0,97) | >70% | 43,5 |
| Mitra-Vergleichsbeispiel | Ac-β-CD(1,13) | <0,6% | nicht bestimmbar |
| Cyclolab-Produkt | Ac-β-CD(1,28) | 39,60% | 37,2 |

## Patentansprüche

1. Teilweise acylierte Cyclodextrine der Formel:

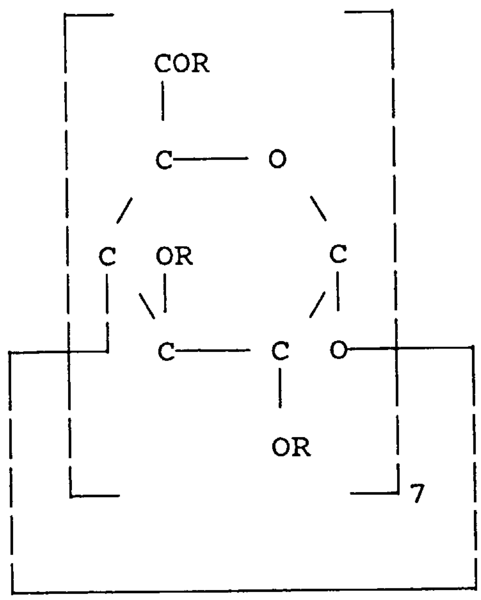

(I),

wobei R Wasserstoff oder R1 bedeutet, dadurch gekennzeichnet, daß R1 gleich oder verschieden sein kann und Acetyl, Propionyl, Butyryl, 2-Alkoxyacetyl, 2-Chloracetyl, 2-Fluoracetyl, 2-N-Acetylaminoacetyl, Methacryloyl oder Acryloyl bedeutet,
und R1 randomisiert vorliegt und der DS für R1, gemessen mittels $^1$H-NMR-Spektroskopie, zwischen 0,30 und 1,20 liegt und die Hydroxygruppen in 6-Position der Glucosen zu weniger als 85 % substituiert sind.

2. Teilweise acylierte Cyclodextrine gemäß Anspruch 1, dadurch gekennzeichnet, daß die Hydroxygruppen in 6-Position der Glucosen zu weniger als 80% substituiert sind.

3. Teilweise acylierte Cyclodextrine gemäß Anspruch 2, dadurch gekennzeichnet, daß die Hydroxygruppen in 6-Position der Glucosen zu weniger als 75 % substituiert sind.

4. Teilweise acylierte Cyclodextrine gemäß einem der Ansprüche 1 bis 3, dadurch gekennzeichnet, daß R1 in Formel I Acetyl, Propionyl, Butyryl oder 2-Chloracetyl bedeutet.

5. Teilweise acylierte Cyclodextrine gemäß Anspruch 4, dadurch gekennzeichnet, daß der DS für R1 zwischen 0,8 und 1,20 liegt.

6. Teilweise acylierte Cyclodextrine gemäß Anspruch 5, dadurch gekennzeichnet, daß der DS für R1 zwischen 0,9 und 1,1 liegt.

7. Verfahren zur Herstellung von acylierten β-cyclodextrinderivaten gemäß Anspruch 1, dadurch gekennzeichnet, daß β-Cyclodextrin mit einem Acylierungsmittel in Gegenwart eines basischen Katalysators umgesetzt wird.

8. Verfahren nach Anspruch 7, dadurch gekennzeichnet, daß als Acylierungsmittel Essigsäureanhydrid, Propionsäureanhydrid, Buttersäureanhydrid, 2-Chloressigsäureanhydrid, 2-Fluoressigsäureanhydrid, Acrylsäureanhydrid, Methacrylsäureanhydrid oder die korrespondierenden Carbonsäuren, einzeln oder in beliebiger Mischung eingesetzt werden.

9. Verwendung von Cyclodextrin-Derivaten nach einem oder mehreren der Ansprüche 1 bis 6

   zur Solubilisierung von schwer wasserlöslichen Verbindungen oder
   als Formulierungshilfsmittel in pharmazeutischen, kosmetischen und agrochemischen Produkten, oder

zur Stabilisierung von licht-, wärme-, oder oxidationsempfindlichen Stoffen, oder
zur Entfettung und Reinigung von beliebigen Oberflächen, oder
zum Ersatz von organischen Lösungsmitteln bei der Trennung und Extraktion von Substanzen aus lipophilen Medien, oder
als Hilfsstoffe bei der Beschichtung und/oder Haftvermittlung in der Papier-, Leder- und Textilindustrie, oder
als Phasentransfer-Katalysator oder
zur Geschmacks- und Geruchsmaskierung.

## Claims

1. Partially acylated cyclodextrins of the formula:

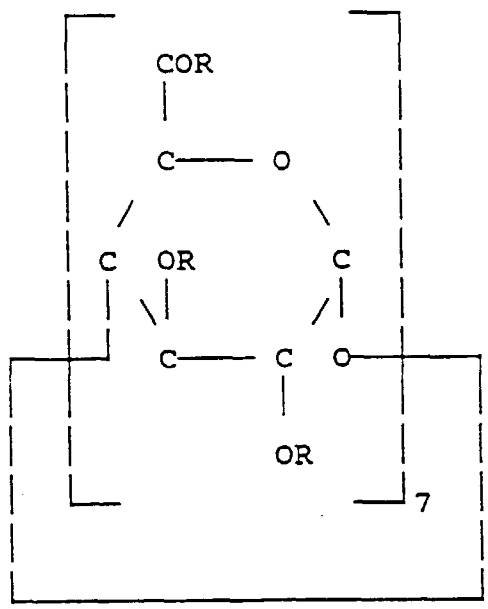

where R denotes hydrogen or R1, characterized in that R1 can be identical or different and denotes acetyl, propionyl, butyryl, 2-alkoxyacetyl, 2-chloroacetyl, 2-fluoroacetyl, 2-N-acetylaminoacetyl, methacryloyl or acryloyl, and R1 is randomized and the DS for R1, measured by means of $^1H$ NMR spectroscopy, is between 0.30 and 1.20, and the hydroxyl groups in the 6 positions of the glucoses are less than 85%-substituted.

2. Partially acylated cyclodextrins according to Claim 1, characterized in that the hydroxyl groups in the 6 positions of the glucoses are less than 80%-substituted.

3. Partially acylated cyclodextrins according to Claim 3, characterized in that the hydroxyl groups in the 6 positions of the glucoses are less than 75%-substituted.

4. Partially acylated cyclodextrins according to one of Claims 1 to 3, characterized in that R1 in formula I denotes acetyl, propionyl, butyryl or 2-chloroacetyl.

5. Partially acylated cyclodextrins according to Claim 4, characterized in that the DS for R1 is between 0.8 and 1.20.

6. Partially acylated cyclodextrins according to Claim 5, characterized in that the DS for R1 is between 0.9 and 1.1.

7. Process for preparing acylated β-cyclodextrin derivatives according to Claim 1, characterized in that β-cyclodextrin is reacted with an acylating agent in the presence of a basic catalyst.

8. Process according to Claim 7, characterized in that acetic anhydride, propionic anhydride, butyric anhydride, 2-chloroacetic anhydride, 2-fluoroacetic anhydride, acrylic anhydride or methacrylic anhydride, or the corresponding carboxylic acids, individually or in arbitrary mixture, are employed as acylating agent.

**9.** Use of cyclodextrin derivatives according to one or more of Claims 1 to 6

for solubilizing sparingly water-soluble compounds, or
as formulation adjuvants in pharmaceutical, cosmetic and agrochemical products, or
for stabilizing substances which are sensitive to light, heat or oxidation, or
for defatting and cleaning any surfaces whatsoever, or
for replacing organic solvents in the separation and extraction of substances from lipophilic media, or
as auxiliary substances in coating and/or adhesion mediation in the paper, leather and textile industries, or
as a phase-transfer catalyst, or
for masking tastes and odours.

## Revendications

**1.** Cyclodextrines partiellement acylées, de formule :

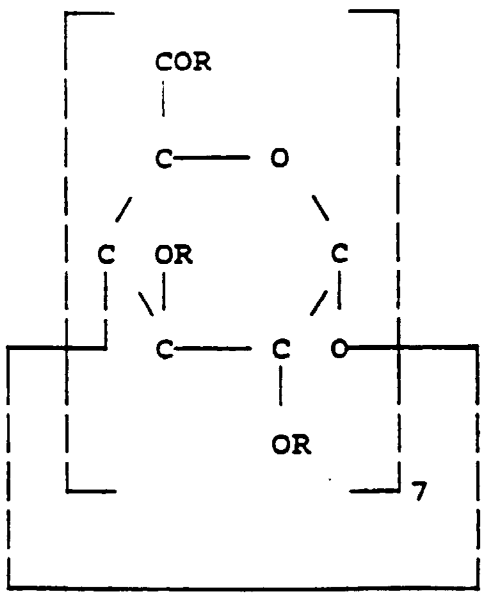

(I),

dans laquelle R représente hydrogène ou R1, caractérisées en ce que R1 peut être identique ou différent et représente acétyle, propionyle, butyryle, 2-alcoxyacétyle, 2-chloroacétyle, 2-fluoroacétyle, 2-N-acétylaminoacétyle, méthacryloyle ou acryloyle,
et R1 est aléatoire et la DS pour R1, mesurée par spectroscopie RMN $^1$H, se situe entre 0,30 et 1,20 et les radicaux hydroxyle en position 6 du glucose sont substitués pour moins de 85%.

**2.** Cyclodextrines partiellement acylées suivant la revendication 1, caractérisées en ce que les radicaux hydroxyle en position 6 des glucoses sont substitués pour moins de 80%.

**3.** Cyclodextrines partiellement acylées suivant la revendication 2, caractérisées en ce que les radicaux hydroxyle en position 6 des glucoses sont substitués pour moins de 75%.

**4.** Cyclodextrines partiellement acylées suivant l'une quelconque des revendications 1 à 3, caractérisées en ce que R1 dans la formule I représente acétyle, propionyle, butyryle ou 2-chloroacétyle.

**5.** Cyclodextrines partiellement acylées suivant la revendication 4, caractérisées en ce que la DS pour R1 se situe entre 0,8 et 1,20.

**6.** Cyclodextrines partiellement acylées suivant la revendication 5, caractérisées en ce que la DS pour R1 se situe entre 0,9 et 1,1.

**7.** Procédé de préparation de dérivés β-cyclodextrine acylés suivant la revendication 1, caractérisé en ce que la β-cyclodextrine est mise à réagir avec un agent d'acylation en présence d'un catalyseur basique.

**8.** Procédé suivant la revendication 7, caractérisé en ce que l'on utilise comme agent d'acylation, l'anhydride acétique, l'anhydride propionique, l'anhydride butyrique, l'anhydride 2-chloroacétique, l'anhydride 2-fluoroacétique l'anhydride acrylique, l'anhydride méthacrylique ou les acides carboxyliques correspondants, seuls ou en mélange quelconque.

**9.** Utilisation de dérivés de cyclodextrine suivant l'une ou plusieurs de revendications 1 à 6,

pour solubiliser des composés difficilement solubles dans l'eau, ou
comme aides à la formulation dans des produits pharmaceutiques, cosmétiques et agrochimiques, ou
pour stabiliser des matières sensibles à la lumière, la chaleur ou l'oxydation, ou
pour dégraisser et nettoyer des surfaces quelconques, ou
pour remplacer des solvants organiques lors de la séparation et de l'extraction de substances à partir de milieux lipophiles, ou
comme auxiliaires lors du revêtement et/ou de l'intervention dans l'adhérence dans les industries du papier, du cuir et du textile, ou
comme catalyseur de transfert de phase, ou
pour masquer goûts et odeurs.